(19) Europäisches Patentamt

European Patent Office

Office européen des brevets

(11) Veröffentlichungsnummer: **0 281 759 B1**

# (12) EUROPÄISCHE PATENTSCHRIFT

(45) Veröffentlichungstag der Patentschrift:
**19.12.90**

(21) Anmeldenummer: **88101509.3**

(22) Anmeldetag: **03.02.88**

(51) Int. Cl.⁵: **H01J 29/00**

(54) **Einrichtung zur Halterung der Entmagnetisierungsspule an der Bildröhre.**

(30) Priorität: **12.02.87 DE 3704341**

(43) Veröffentlichungstag der Anmeldung:
**14.09.88 Patentblatt 88/37**

(45) Bekanntmachung des Hinweises auf die Patenterteilung:
**19.12.90 Patentblatt 90/51**

(84) Benannte Vertragsstaaten:
**AT BE CH DE ES FR GB GR IT LI LU NL SE**

(56) Entgegenhaltungen:
**DE-U- 7 517 755**
**DE-U- 8 501 295**
**FR-A- 2 372 560**
**US-A- 4 700 260**

**PATENT ABSTRACTS OF JAPAN, Band 9,**
**Nr. 258 (E-350)[1981], 16. Oktober 1985; &**
**JP-A-60 106 286 (MATSUSHITA DENKI SANGYO**
**K.K.) 11-06-1985**

(73) Patentinhaber: **EWD Electronic-Werke Deutschland GmbH, D-7730 Villingen-Schwenningen(DE)**

(72) Erfinder: **Goseberg, Walter, Dipl.-Ing., Kopenhagener Strasse 81, D-3000 Hannover 91(DE)**
Erfinder: **Richter,Hans, Merianweg 31, D-3000 Hannover(DE)**
Erfinder: **Renner, Hans, Ing.Phys., Am Kleikamp 16, D-3014 Laatzen 5(DE)**
Erfinder: **Teschner, Werner, Stammestrasse 2, D-3000 Hannover(DE)**
Erfinder: **Heidrich, Rolf, Untere Reihe 7D, D-3000 Hannover(DE)**

(74) Vertreter: **Körner, Peter, Dipl.-Ing., E W D Electronic-Werke Deutschland GmbH Patent- und Lizenzabteilung Göttinger Chaussee 76, D-3000 Hannover 91(DE)**

## Beschreibung

In einem Farbfernsehempfänger ist an der Bildröhre eine Entmagnetisierungsspule erforderlich. Diese wird jeweils beim Einschalten des Empfängers mit einem abklingenden Wechselstrom gespeist und bewirkt eine Entmagnetisierung der Lochmaske, da sonst durch Magnetisierung der Lochmaske durch Erdfelder und dergleichen Farbreinheitsfehler auftreten können. Die Entmagnetisierungsspule besteht beispielsweise aus zwei sattelförmigen Spulen oder auch einer durchgehend gewickelten Spule, die um den Konus der Bildröhre im vorderen Bereich herumgelegt ist. Die Spule muß daher an dem relativ unförmigen und wenig Befestigungsmöglichkeiten aufweisenden Glaskolben der Bildröhre gehalten werden. Diese Halterung erfordert mehrere Teile wie z.B. Klemmen, Kunststoffbänder, Federn und dergleichen. Die manuelle Anbringung der Spule oder der Spulen an der Bildröhre benötigt daher relativ viel Zeit. Es hat sich auch gezeigt, daß die Entmagnetisierungsspule durch mangelhafte Anbringung oder durch Alterungserscheinungen der Befestigung nicht immer die optimale Lage zur Bildröhre hat, so daß die Entmagnetisierung nicht optimal wirkt und Farbreinheitsfehler verbleiben.

Der Erfindung liegt die Aufgabe zugrunde, eine Einrichtung zur Halterung der Entmagnetisierungsspule an der Bildröhre zu schaffen, die konstruktiv einfach ist, wenig Bauteile erfordert und eine schnelle und leichte manuelle Befestigung der Spule an der Bildröhre ermöglicht.

Diese Aufgabe wird durch die im Anspruch 1 beschriebene Erfindung gelöst. Vorteilhafte Weiterbildungen der Erfindung sind in den abhängigen Ansprüchen beschrieben.

Die erfindungsgemäße Einrichtung hat mehrere Vorteile. Während bekannte Einrichtungen zur Halterung der Spule eine größere Zahl von etwa zehn Einzelteilen benötigte, brauchen bei der Erfindung nur die Bügel an ihren beiden Enden in den Rand der Bilröhre eingerastet zu werden. Danach wird die Spule in Halterungen an dem Bügel eingehängt. Die Federwirkung der ausgelenkten Bügel bewirkt dann eine stramme Halterung der Spulen an dem Konusteil der Bildröhre. Zusätzliche Einzelteile zur Befestigung des Bügels an der Bildröhre oder der Spule an dem Bügel sind nicht notwendig. Dadurch ergibt sich eine besonders einfache und schnelle Montage der Spule an der Bildröhre. Die für die Entmagnetisierung optimale Lage der Spule relativ zur Bildröhre wird praktisch ohne große Abweichungen eingehalten. Dadurch ergibt sich stets eine optimale Entmagnetisierung bei geringem Kupferaufwand für die Spule. Der Bügel kann zusätzlich zur Halterung des sog. Massebandes dienen, das eine Erdung des Aquadag-Belages der Bildröhre bewirkt. Vorzugsweise sind zwei Bügel zur Halterung von zwei Spulen zwischen den Bügeln vorgesehen.

Die Erfindung wird im folgenden anhand der Zeichnung erläutert. Darin zeigen

Figur 1 eine Rückansicht einer Bildröhre mit der Entmagnetisierungsspule und dem Bügel,

Figur 2 die konstruktive Ausbildung des Bügels und

Figur 3 die konstruktive Ausbildung der Rastmittel.

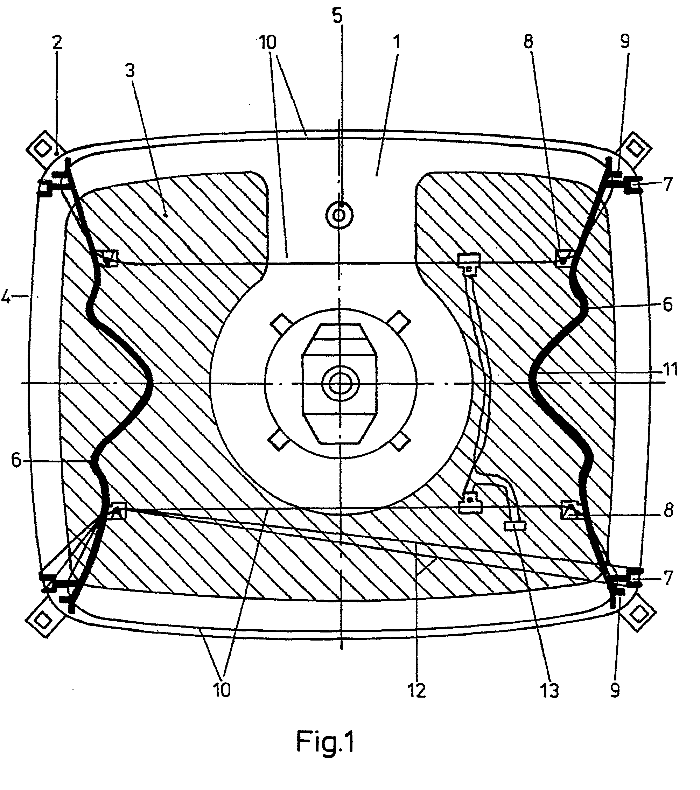

Figur 1 zeigt die Bildröhre 1 mit den zur Befestigung an der Frontplatte des Fernsehempfängers dienenden vier Flanschen oder Ohren 2, dem Aquadag-Belag 3, dem umlaufenden Rand 4 des die Bildröhre 1 umgebenden Metallrahmens und dem Hochspannungsanschluß 5. An beiden senkrechten Seiten der Bildröhre 1 ist je ein aus Kunststoff bestehender Bügel 6 vorgesehen. Der Bügel 6 ist mit seinen beiden Enden durch eine formschlüssige Rastverbindung 7 auf den umlaufenden Rand 4 des Metallrahmens aufgesetzt. Der Bügel 6 hat an seinen beiden Enden eine Aufnahme 9 und außendem zwei Aufnahmen 8, in die jeweils eine Entmagnetisierungsspule 10 eingelegt ist. Die Aufnahmen 8, 9 sind an der Auflage der Spule 10 abgerundet und dem Verlauf und der Form oder Spule 10 so angepaßt, daß die Spule 10 durch die Halterungen 8, 9 nicht geknickt, eingedrückt oder sonstwie beeinträchtigt wird. Der Bügel 6 ist in seinem mittleren Bereich 11 durch eine wellenförmige Ausbildung federnd ausgebildet, sc daß die beiden Spulen 10 durch die Federwirkung der Bügel 6 in definierter Lage stramm an der Bildröhre 1 gehalten werden. Der Bügel 6 ist zu beiden Seiten seiner Mitte 11 symmetrisch ausgebildet. Durch die beiden Bügel 6 werden also für die beiden Spulen 10 insgesamt acht Halterungspunkte gebildet. Die Bügel 6 zu beiden senkrechten Seiten der Bildröhre 1 dienen zusätzlich zur Halterung des Massebandes 12, das an dem Aquadag-Belag 3 anliegt und zur Erdung dieses Belags dient. Das Masseband 12 ist vorzugsweise als leitendes Gummiband entsprechend der älteren Anmeldung EP-A 0 248 367 ausgebildet. Die beiden Entmagnetisierungsspulen 10 sind über den Stecker 13 an die den Entmagnetisierungsstrom liefernde Wechselspannungsquelle der Empfängerschaltung angeschlossen. Die beiden Bügel 6 bestehen aus einem Kunststoff, z.B. aus einem glasfaserverstärkten Polyamid.

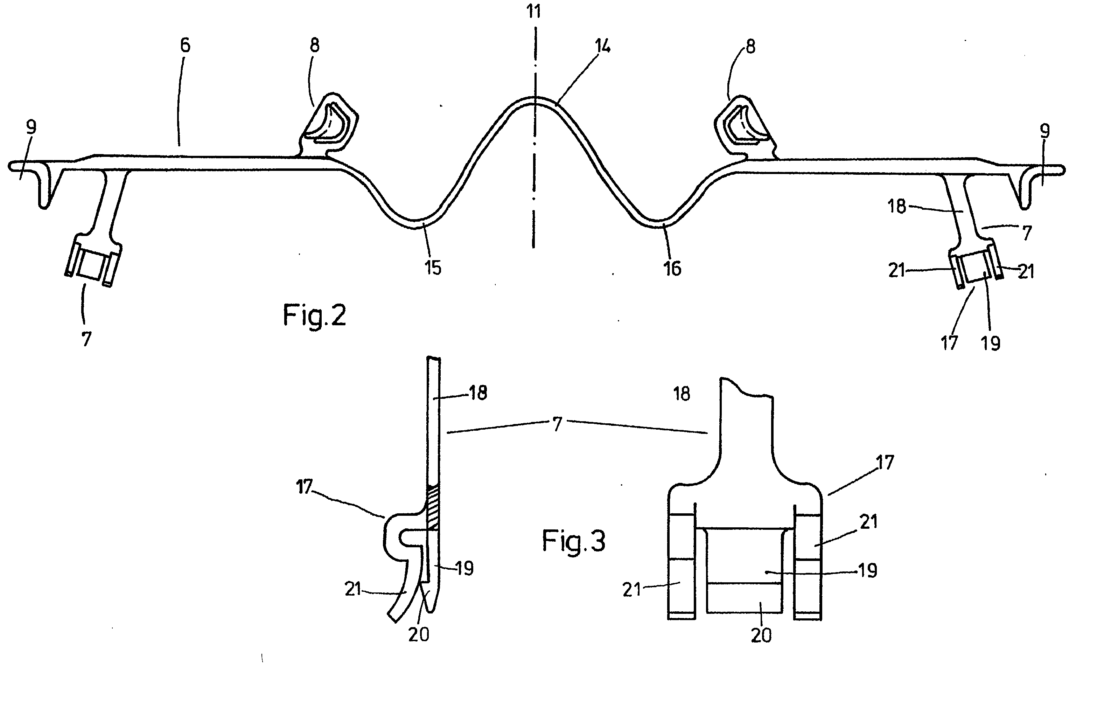

Figur 2 zeigt in einer Draufsicht die konstruktive Ausbildung des Bügels 6. Die beiden Halterungen 9 an den beiden Enden des Bügels 6 sind als gabelförmige, abgerundete Ausbildung geformt, an die sich die Spule 10 ohne nennenswerte Knickung oder sonstige Beanspruchung anlegt. Die Halterungen 8 haben etwa teilkreisförmigen Verlauf und bilden weiche Umlenkpunkte für die Spulen 10. Die Rastmittel 7 sind in Form einer gabelförmigen Klammer ausgebildet und können formschlüssig auf den Rand 4 des Metallrahmens in entsprechende Ausnehmungen eingeschnappt werden. Im Bereich seiner Mitte 11 hat der Bügel 6 einen sinusförmigen Verlauf mit einer zur Bildröhrenachse und zur Spule 10 hin gerichteten Sinushalbwelle 14, zu deren beiden Seiten zwei weitere Sinushalbwellen 15,16 mit entgegengesetzter Richtung liegen. Durch diesen sinusförmigen Verlauf des Bügels 6 wird folgendes erreicht: Die Rastmittel 7 an den beiden Enden des Bügels 6 bilden nach der Befestigung des Bügels 6 an dem Rand 4 gewissermassen Fixpunkte. Dadurch könnte der Bügel 6 nicht mehr federnd ausgebildet sein, weil für eine Federwirkung ein Längenausgleich notwendig ist. Dieser Längenausgleich wird durch die Sinushalbwellen 14 - 16 erreicht. Bei der Beanspruchung des Bügels 6, also der Auslenkung in Richtung zur Bildröhrenachse durch die Spulen 10, werden in vorteilhafter Weise die drei dargestellten Sinushalbwellen 14,15,16 gleichmäßig gedehnt, also zur Erzielung der Federwirkung gleichmäßig ausgenutzt. Der Winkel an den Sinuskuppen, d.h. der Winkel, den dort die Geraden mit der Steigung der Nulldurchgänge bilden, wird dabei etwa von 75° bis 80° auf 110° erhöht. Besonders wichtig und vorteilhaft ist dabei, daß die Sinushalbwelle 14 in der Mitte in Richtung der federnden Beanspruchung, also in Richtung der Bildröhrenachse gerichtet ist. Durch diese Ausbildung wird auch eine optimale Anbindung des federnden Teils 14 - 16 an den anschließenden, im wesentlichen starren Teil des Bügels 6, zwischen den Halterungen 8,9 erreicht.

Figur 3 zeigt die Ausbildung der Rastverbindungen 7. Mit dem Längssteg des Bügels 6 ist eine gabelförmige Klemmvorrichtung 17 über einen Arm 18 verbunden. Die Klemmvorrichtung 17 enthält einen im wesentlichen starren Steg 19, der mit einem Widerhaken 20 in eine Ausnehmung des Randes 4 formschlüssig eingreift. Zwischen dem Steg 19 und den beidseits angeordneten federnden Rippen 21 ist das Masseband 12 eingeklemmt und wird dadurch an den Rand 4 des Metallrahmens gedrückt. Da durch ist der die Bildröhre 1 umgebende Metallrahmen mit dem Rand 4 über das mit Gerätemasse verbundene leitende Masseband 12 geerdet, was zur Vermeidung statischer Aufladungen notwendig ist. Alle in Figur 2, 3 dargestellten Teile bestehen aus einem Kunststoff-Spritzteil.

## Patentansprüche

1. Einrichtung zur Halterung der Entmagnetisierungsspule (10) an der Bildröhre (1) in einem Fernsehempfänger, gekennzeichnet durch durch einen Kleiderbügel-artigen, federnden Bügel (6), der im Bereich seiner beiden Enden Rastmittel (7) zum Aufsetzen auf den Rand (4) des die Bildröhre (1) umgebenden Metallrahmens und außerdem Halterungen (8,9) zur Aufnahme der Entmagnetisierungsspule (10) aufweist.

2. Einrichtung nach Anspruch 1, dadurch gekennzeichnet, daß der Bügel (6) zu beiden Seiten seiner Mitte symmetrisch ausgebildet ist.

3. Einrichtung nach Anspruch 1, dadurch gekennzeichnet, daß der Bügel (6) in seiner mittel (11) einen federnden Bereich hat.

4. Einrichtung nach Anspruch 3, dadurch gekennzeichnet, daß der Bügel (6) im Bereich seiner Mitte (11) einen zum Längenausgleich dienenden wellenförmigen Verlauf (14-16) hat.

5. Einrichtung nach Anspruch 4, dadurch gekennzeichnet, daß der Bügel (6) im Bereich seiner Mitte (11) einen sinusförmigen Verlauf (14-16) hat.

6. Einrichtung nach Anspruch 5, dadurch gekennzeichnet, daß der Verlauf in der Mitte (11) des Bügels (6) einer Sinushalbwelle (14) in Richtung der Entmagnetisierungsspule (10) und zu deren beiden Seiten einer entgegengesetzten, zum Bildschirmrand gerichteten Sinushalbwelle (15,16) entspricht.

7. Einrichtung nach Anspruch 1, dadurch gekennzeichnet, daß der Bügel (6) aus einem glasfaserverstärkten Polyamid besteht.

8. Einrichtung nach Anspruch 1, dadurch gekennzeichnet, daß die Rastmittel (7) derart ausgebildet sind, daß die Einrichtung zusätzlich zur Halterung eines Massebandes (12) zur Erdung des Aquadag-Belags (3) der Bildröhre (1) dienen kann.

9. Einrichtung nach Anspruch 8, dadurch gekennzeichnet, daß die Rastmittel (7) eine gabelförmige Klemmvorrichtung (17) für den Rand des Metallrahmens (4) und das Masseband (12) aufweisen und die Klemmvorrichtung (17) so ausgebildet ist, daß das darin eingehängte Masseband (12) an dem die Bildröhre (1) umgebenden Metallrahmen anliegt .

## Revendications

1. Dispositif pour la fixation de la bobine de démagnétisation (10) sur le tube image (1) d'un récepteur de télévision, caractérisé par un étrier (6) élastique, du type cintre pour vêtements, qui présente, dans la zone de ses deux extrémités, des moyens d'enclenchement (7) pour la pose sur le bord (4) du cadre métallique qui entoure le tube image (1) et qui présente, de plus, des fixations (8, 9) pour le logement de la bobine de démagnétisation (10).

2. Dispositif selon la revendication 1, caractérisé en ce que l'étrier (6) est configuré de manière symétrique des deux côtés de son milieu.

3. Dispositif selon la revendication 1, caractérisé en ce que l'étrier (6) a une zone élastique en son milieu (11).

4. Dispositif selon la revendication 3, caractérisé en ce que l'étrier (6) a, dans la zone de son milieu (11), une allure ondulée (14–16) qui sert à la compensation de longueur.

5. Dispositif selon la revendication 4, caractérisé en ce que l'étrier (6) a, dans la zone de son milieu (11), une allure sinusoïdale (14–16).

6. Dispositif selon la revendication 5, caractérisé en ce que l'allure du milieu (11) de l'étrier (6) correspond à une onde demi-sinusoïde (14) en direction de la bobine de démagnétisation (10) et, de ses deux côtés, à une onde demi-sinusoïde (15, 16) opposée, orientée vers le bord de l'écran.

7. Dispositif selon la revendication 1, caractérisé en ce que l'étrier (6) est constitué par un polyamide renforcé par fibres de verre.

8. Dispositif selon la revendication 1, caractérisé en ce que les moyens d'enclenchement (7) sont configurés de telle manière que le dispositif puisse, de plus, servir à la fixation d'une bande homogène (12) pour la mise à la terre du revêtement en aquadag (3) du tube image (1).

9. Dispositif selon la revendication 8, caractérisé en ce que les moyens d'enclenchement (7) présentent un dispositif de serrage fourchu (17) pour le bord du cadre métallique (4) et la bande homogène (12) et que le dispositif de serrage (17) est configuré de manière telle que la bande homogène (12) qui y est suspendue est posée contre le cadre métallique qui entoure le tube image (1).

## Claims

1. A device for mounting the demagnetisation coil (10) on the picture tube (1) in a television receiver, characterised by: a clothes hanger-type, resilient bracket (6), which has near its two ends snap means (7) for mounting on the rim (4) of the metal framework surrounding the picture tube (1) and moreover mountings (8, 9) for receiving the demagnetisation coil (10).

2. A device according to claim 1, characterised in that the bracket (6) is symmetrical at both sides of its centre.

3. A device according to claim 1, characterised in that the bracket (6) has a resilient region at its centre (11)

4. A device according to claim 3, characterised in that the bracket (6) has near its centre (11) an undulating path (4-1) which serves to adjust the lengths.

5. A device according to claim 4, characterised in that the bracket (6) has near its centre (11) a sine wave-shaped path (14–16).

6. A device according to claim 5, characterised in that the path at the centre (11) of the bracket (6) corresponds to a sine half wave (14) in the direction of the demagnetisation coil (10) and at both sides thereof corresponds to an opposite sine half wave (15, 16) which is directed to the rim of the picture screen.

7. A device according to claim 1, characterised in that the bracket (6) consists of a glass fibre-reinforced polyamide.

8. A device according to claim 1, characterised in that the snap means (7) are formed such that the device may serve also to mount an earthing strap (12) for earthing the aquadag coating (3) of the picture tube (1).

9. A device according to claim 8, characterised in that the snap means (7) have a forked clamping device (17) for the rim of the metal framework (4) and the earthing strap (12) and the clamping device (17) is so formed that the earthing strap (12) hooked therein rests on the metal framework surrounding the picture tube (1).

Fig.1

Fig.2

Fig.3